# EUROPEAN PATENT SPECIFICATION

(11) **EP 4 124 081 B1**
(45) Date of publication and mention of the grant of the patent: **18.03.2026**
(21) Application number: 22177390.6
(22) Date of filing: 06.06.2022
(51) Int. Cl.: H04W 4/06

(54) **APPLICATION FUNCTION INITIATED MULTICAST SESSION JOIN PROCEDURES FOR MULTICAST BROADCAST SERVICES**
VON DER ANWENDUNGSFUNKTION INITIIERTE VERFAHREN ZUM BEITRITT ZU MULTICAST-SITZUNGEN FÜR MULTICAST-RUNDFUNKDIENSTE
PROCÉDURES D'ADHÉSION À DES SESSIONS DE MULTIDIFFUSION INITIÉES PAR UNE FONCTION D'APPLICATION POUR DES SERVICES DE DIFFUSION/MULTIDIFFUSION

(30) Priority: 23.07.2021 US 202163225028 P; 25.04.2022 US 202217728766
(43) Date of publication of application: 25.01.2023
(73) Proprietor: Apple Inc., Cupertino CA 95014 (US)
(72) Inventor: MANITHARA VAMANAN, Sudeep, Cupertino, 95014 (US); HU, Haijing, Cupertino, 95014 (US); ZAUS, Robert, Cupertino, 95014 (US)
(74) Representative: Simmons & Simmons

(56) References cited:
- WO-A1-2021/098108
- US-A1- 2021 105 196

## Description

### BACKGROUND

### Field

The embodiments relate generally to multicast broadcast services (MBS) in a wireless communication system.

### Related Art

User equipment trigger multicast session join/leave procedures for multicast-broadcast services (MBS) using Non-Access Stratum (NAS) layer session management signalling.
US2021/0105196 discloses a method for group communications with shared downlink data including a function to switchin downlink delivery between a unicast delivery and a shared delivery.
WO2021/098108 discloses a system for providing flexible multicast or broadcast session establishment and management.

### SUMMARY

The invention is defined by the appended independent claims. A selection of optional features of the invention is set out in the dependent claims.

Insofar as the term invention or embodiment is used in the following, or features are presented as being optional, this should be interpreted in such a way that the only protection sought is that of the invention claimed (with due regard to Article 69 EPC and the protocol thereto).

Reference(s) to "embodiment(s)" throughout the description which are not under the scope of the appended claims merely represent possible exemplary executions and are not part of the present invention.

### BRIEF DESCRIPTION OF THE FIGURES

The accompanying drawings, which are incorporated herein and form part of the specification, illustrate the presented disclosure and, together with the description, further serve to explain the principles of the disclosure and enable a person of skill in the relevant art(s) to make and use the disclosure.
FIG. 1 illustrates an example system for application function (AF) initiated multicast session join procedures for multicast broadcast services (MBS), in accordance with some embodiments of the disclosure.
FIGS. 2A and 2B illustrate an example system supporting AF initiated multicast session join procedures for MBS, according to some embodiments of the disclosure.
FIGS. 3A and 3B illustrate an example system supporting AF initiated multicast session join procedures for MBS with application triggering, according to some embodiments of the disclosure.
FIG. 4 illustrates an example system supporting AF initiated multicast session join procedures for MBS with application level redirection, according to some embodiments of the disclosure.
FIG. 5 illustrates examples for user equipment (UE) consent supporting AF initiated multicast session join procedures, according to some embodiments of the disclosure.
FIG. 6 illustrates an example method for an AF performing multicast session join procedures for MBS, according to some embodiments of the disclosure.
FIG. 7 illustrates a block diagram of an example wireless system operating in a MBS environment, according to some embodiments of the disclosure.
FIG. 8 is an example computer system for implementing some embodiments or portion(s) thereof.

The presented disclosure is described with reference to the accompanying drawings. In the drawings, generally, like reference numbers indicate identical or functionally similar elements. Additionally, generally, the left-most digit(s) of a reference number identifies the drawing in which the reference number first appears.

### DETAILED DESCRIPTION

Next generation (e.g., fifth generation (5G)) multicast broadcast services (MBS) can include an application function (AF) server that performs session join/leave procedures for a user equipment (UE). Some embodiments include procedures for a system providing MBS when a Protocol Data Unit (PDU) session has not yet been established, and describes UE identifiers that may be used to perform session join/leave procedures. Some embodiments describe corresponding UE control regarding the MBS multicast sessions (e.g., how a UE can control which AFs are authorized to enable the UE to join a multicast session of a MBS.) AFs can include a functions of a content provider.

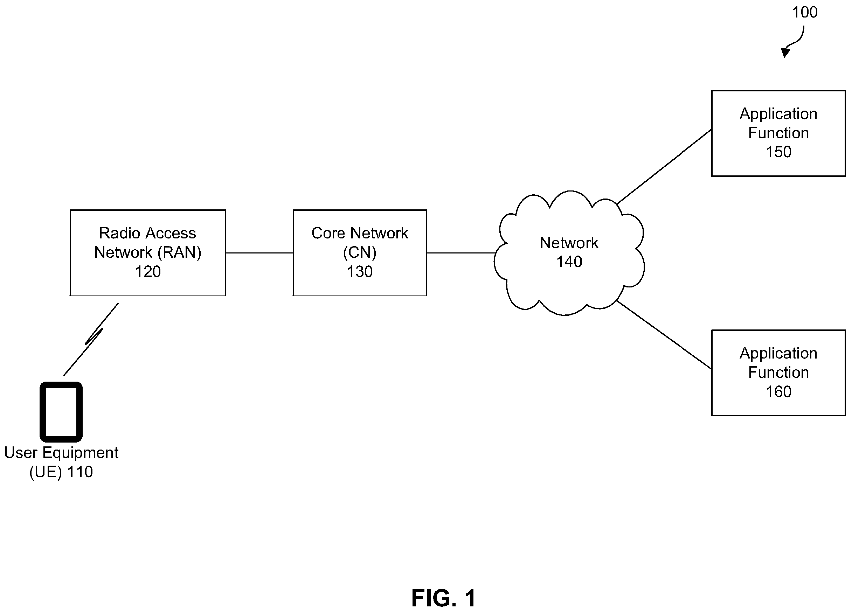

FIG. 1 illustrates example system 100 for application function (AF) initiated multicast session join procedures for multicast broadcast services (MBS), in accordance with some embodiments of the disclosure. System 100 includes UE 110, radio access network (RAN) 120, core network (CN) 130, network 140, AF 150, and AF 160. In some embodiments, RAN 120 can include a next generation RAN and CN 130 includes functions of a next generation core network (e.g., a core network node). UE 110 can be an electronic device that may include but is not limited to a cellular phone, a smart phone, a tablet, a personal digital assistant (PDA), or a laptop. RAN 120 can include one or more base stations including but not limited to a fifth generation Node B (gNB) operating in Frequency Range 1 (FR1) and/or Frequency Range 2 (FR2). An example of next generation communications include but is not limited to fifth generation (5G) or new radio (NR) communications as defined by 3rd Generation Partnership Project (3GPP) standards. For example, UE 110 and RAN 120 can include an electronic device configured to operate using a 3GPP release, such as Release 17 (Rel-17), or other 3GPP standards.

Network 140 can include but is not limited to, any combination of data networks, local area networks (LANs), metropolitan area networks (MANs), Public Land Mobile Networks (PLMN), wireless local area networks (WLANs), and/or the Internet. In some embodiments network 140 includes one or more data networks that can correspond to one or more Data Network Name/Single Network Slice Selection Assistance Information (DNN/S-NSSAI). AF 150 and AF 160 can include one or more AF servers that perform application functions.

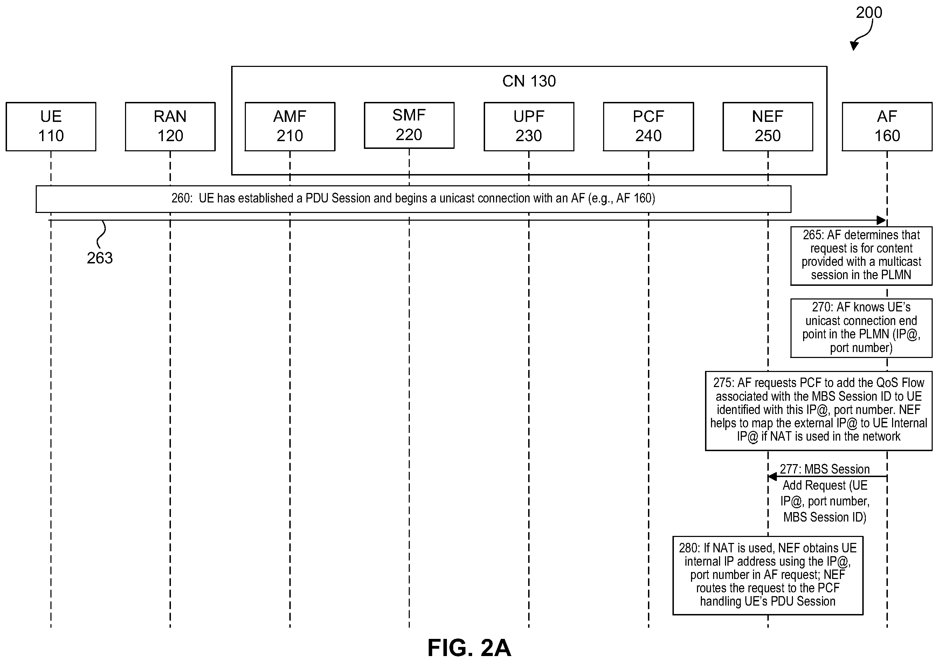

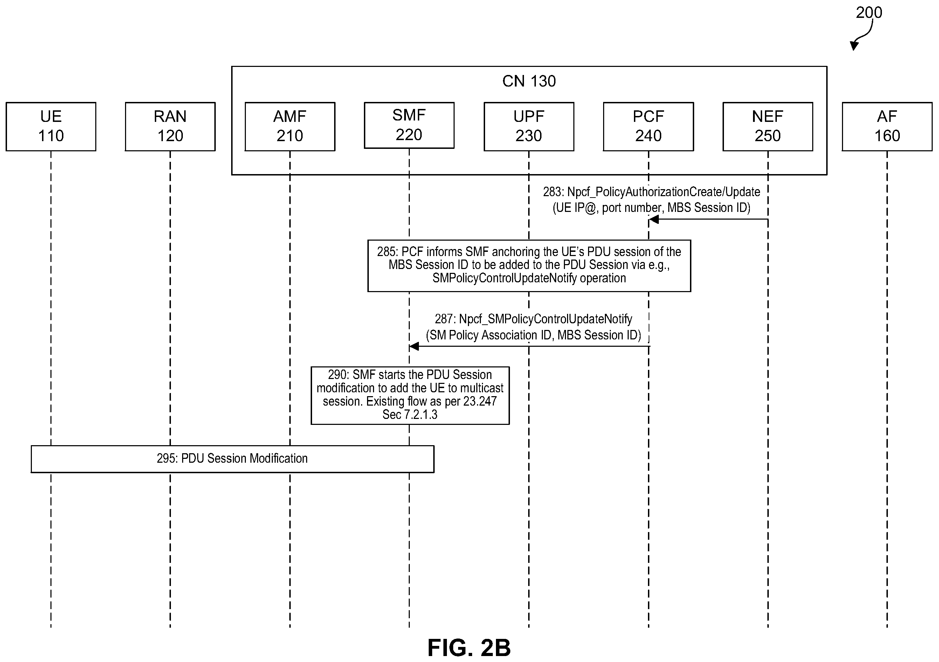

FIGS. 2A and 2B illustrate example system 200 supporting AF initiated multicast session join procedures for MBS, according to some embodiments of the disclosure. As a convenience and not a limitation, system 200 can be described with reference to elements of FIG. 1. For example, CN 130 of FIG. 1 can include Access and Mobility Management Function (AMF) 210, Session Management Function (SMF) 220, User Plane Function (UPF) 230, Policy Control Function (PCF) 240, and Network Exposure Function (NEF) 250. UE 110 can communicate with AMF 210 using Non-Access Stratum (NAS) signaling messages (e.g., Session Management messages) via RAN 120. AMF 210 can transmit the NAS signaling messages (e.g., the Session Management messages) to SMF 220 where the Session Management messages can be used to establish a PDU Session with AF 160 via UPF 230. The PDU Session can be a connection between UE 110 and UPF 230 coupled to the DNN/S-NSSAI within network 140. AF 160 can be coupled to the DNN/S-NSSAI of network 140.

At 260, UE 110 establishes a PDU Session with AF 160, and begins a unicast connection with AF 160.

At 263, UE 110 can transmit a request to AF 160 to fetch content (e.g., a video from AF 160, a content provider.)

At 265, AF 160 can receive the request from UE 110 to fetch content. AF 160 can perform admission control (e.g., perform an authorization check) to determine whether UE 110 is authorized to access the requested content. If UE 110 is authorized to access the requested content, AF 160 can determine whether the requested content is provided by AF 160 as a multicast session of a Multicast Broadcast Service (MBS) or as a unicast session. If the requested content is not provided as a multicast session of the MBS, AF 160 can provide the requested content (e.g., via the established PDU Session via a unicast connection.) If the requested content is provided as a multicast session of an MBS, AF 160 can determine a MBS Session identifier (ID) corresponding to the requested content.

At 270, based on the request, AF 160 can determine UE 110's unicast connection point in CN 130, and AF 160 can determine the corresponding Internet Protocol (IP) address and port number. In some embodiments, RAN 120 and CN 130 can be part of a Public Land Mobile Networks (PLMN). AF 160 can also determine a Quality of Service (QoS) flow associated with the MBS Session ID.

At 275, AF 160 requests that CN 130 add the QoS flow associated with the MBS Session ID of the multicast session of the MBS, to UE 110 identified by the corresponding IP address and port number. In some embodiments, AF 160 can transmit a request to PCF 240 (e.g., via a NEF 250) to add the QoS flow associated with the corresponding MBS session ID of the multicast session of the MBS, to UE 110 identified by the IP address and port number. If a Network Address Translation (NAT) is used within CN 130, NEF 250 can map the IP addess that can be an external IP address, to UE 110's internal IP address.

At 277, for example, AF 160 can transmit a signal such a MBS Session Add Request (IP address, port number, and MBS Session ID) to NEF 250.

At 280, if NAT is implemented, NEF 250 can obtain UE 110's internal address using the IP address and port number. NEF 250 can route the request to PCF 240 that manages UE 110's PDU Session.

At 283, for example, NEF 250 can transmit a signal such as Npcf_Policy AuthorizationCreate/Update (UE 110's internal IP address, port number, MBS Session ID) to PCF 240.

At 285, PCF 240 can inform SMF 220 that anchors UE 110's PDU Session, of the MBS Session ID to be added to the PDU Session (e.g., via an SMPolicyControlUpdateNotification operation.)

At 287, for example, PCF 240 can transmit a signal such as Npcf_SMPolicyControlUpdateNotify (SM Policy Association ID, MBS Session ID) to SMF 220.

At 290, SMF 220 modifies the PDU Session to add UE 110 to the multicast session. For example, SMF 220 can add the QoS flow associated with the corresponding MBS session ID of the multicast session of the MBS to UE 110.

At 295, the PDU Session modification can occur. In some embodiments, subsequent session leaving procedures for leaving the multicast session of the MBS are triggered only by UE 110.

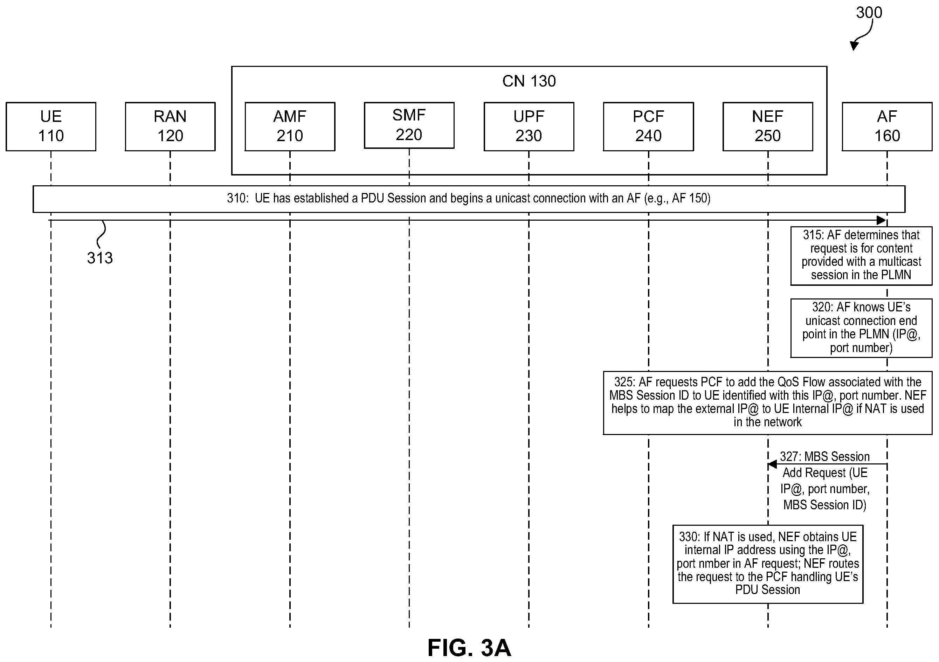

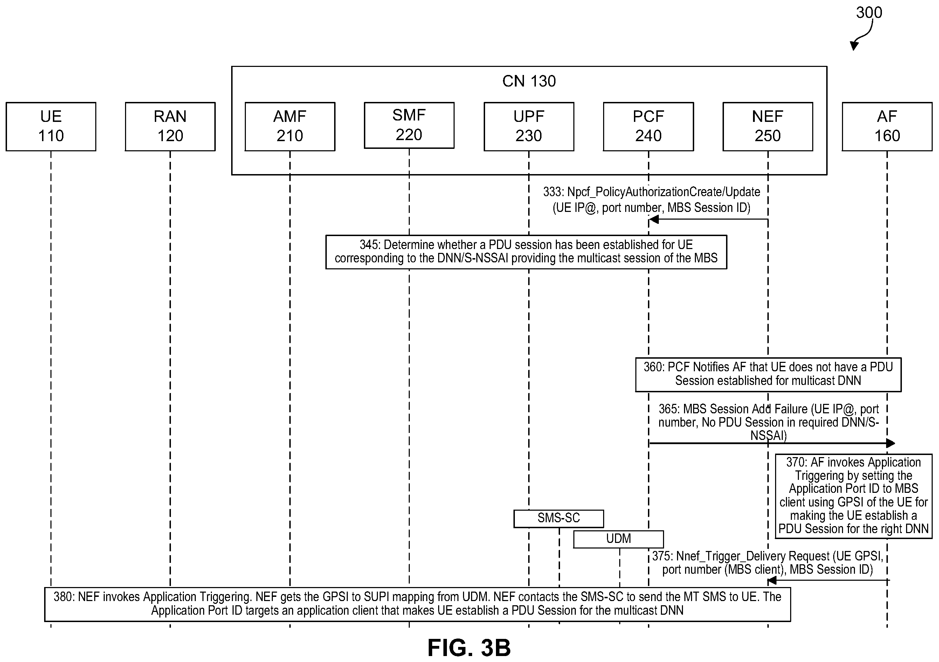

FIGS. 3A and 3B illustrate example system 300 supporting AF initiated multicast session join procedures for MBS with application triggering, according to some embodiments of the disclosure. As a convenience and not a limitation, system 300 can be described with reference to elements of FIGS. 1 and 2. For example, system 300 includes CN 130 of FIG. 1 that can include AMF 210, SMF 220, UPF 230, PCF 240, and NEF 250. In system 300, unlike system 200, UE 110 has not established a PDU Session on the DNN/S-NSSAI providing the multicast session of the MBS. Some embodiments include AF 160 invoking application triggering using Mobile Terminated (MT) Short Message Service (SMS) to enable UE 110 to establish a PDU Session on the DNN/S-NSSAI providing the multicast session of the MBS.

At 310, UE 110 establishes a PDU Session and begins a unicast connection with an AF (e.g., AF 150 that is coupled to a different DNN/S-NSSAI than AF 160.) In other words, UE 110 has not established a PDU Session with AF 160 on the DNN/S-NSSAI providing the multicast session of the MBS.

At 313, UE 110 can transmit a request to AF 160 to fetch content (e.g., a video from AF 160, a content provider.)

At 315, AF 160 can receive the request from UE 110. AF 160 can perform admission control (e.g., authorization) to determine whether UE 110 is authorized to access the requested content. If UE 110 is authorized to access the requested content, AF 160 can determine whether the requested content is provided as a multicast session of an MBS or as a unicast session. If the requested content is provided as a multicast session of an MBS, AF 160 can determine the corresponding MBS Session ID.

At 320, based on the request, AF 160 can determine UE 110's unicast connection point in CN 130, and AF 160 can determine the corresponding Internet Protocol (IP) address and port number. In some embodiments, RAN 120 and CN 130 can be part of a PLMN. AF 160 can also determine a QoS flow associated with the MBS Session ID.

At 325, AF160 can request that CN 130 add the QoS flow associated with the MBS session ID of the multicast session of the MBS, to UE 110 identified by the corresponding IP address and port number. In some embodiments, AF 160 can transmit a request to PCF 240 (e.g., via a NEF 250) to add the QoS flow associated with the corresponding MBS session ID of the multicast session of the MBS, to UE 110 identified by the IP address and port number. If NAT is used within CN 130, NEF 250 can map the IP addess that can be an external IP address, to UE 110's internal IP address.

At 327, for example, AF 160 can transmit a signal such a MBS Session Add Request (IP address, port number, and MBS Session ID) to NEF 250.

At 330, if NAT is implemented, NEF 250 can obtain UE 110's internal address using the IP address and port number. NEF 250 can route the request to PCF 240. PCF 240 is in charge of the policies governing the PDU Session for UE 110 where the multicast session is to be provided.

At 333, for example, NEF 250 can transmit a signal such as Npcf_PolicyAuthorizationCreate/Update (UE 110's internal IP address, port number, MBS Session ID) to PCF 240.

At 345, PCF 240 determines whether a PDU Session has been established for UE 110 corresponding to the DNN/S-NSSAI providing the multicast session of the MBS. For example, PCF 240 determines whether a Session Management (SM) Policy Association ID corresponding to the UE 110 has been established for the DNN/S-NSSAI providing the multicast session of the MBS. When a corresponding SM Policy Association ID does not exist, PCF 240 determines that the corresponding SM Policy Association ID has not been established.

At 360, PCF 240 can notify AF 160 that UE 110 does not have a PDU Session established for the DNN/S-NSSAI providing the multicast session of the MBS.

At 365, for example, PCF 240 can transmit a signal to notify AF 160 such as MBS Session Add Failure (IP address, port number, No PDU Session in required DNN/S-NSSAI). The IP address can be UE 110's external IP address if NAT is employed.

At 370, AF 160 receives the signal from PCF 240. In response, AF 160 can invoke Application Triggering using UE 110's General Public Subscription Identifier (GPSI) to enable UE 110 to establish a PDU Session with the DNN/S-NSSAI providing the multicast session of the MBS. For example, AF 160 can set an Application Port ID field identifying the MBS client and use UE 110's GPSI, thus asking UE 110 to initiate a PDU Session on the DNN/S-NSSAI providing the multicast session of the MBS.

At 375, for example, AF 160 can transmit a signal such as Nnef_Trigger_Delivery Request (UE 110's GPSI, port number (MBS client), MBS Session ID).

At 380, NEF 250 invokes Application Triggering. For example, NEF 250 obtains the mapping of UE 110's GPSI to UE 110's Subscription Permanent Identifier (SUPI). NEF 250 can obtain the mapping from a Unified Data Management (UDM) (not shown.) NEF 250 can contact the SMS-Service Center (SC) (not shown) to send an MT SMS to UE 110. The Application Port ID targets the MBS client of UE 110 that triggers UE 110 to establish a PDU Session with the DNN/S-NSSAI providing the multicast session of the MBS. In some embodiments, the PDU Session can include a multicast session (e.g., QoS flow) corresponding to the MBS Session ID (e.g., the MBS Session ID corresponding to the requested content).

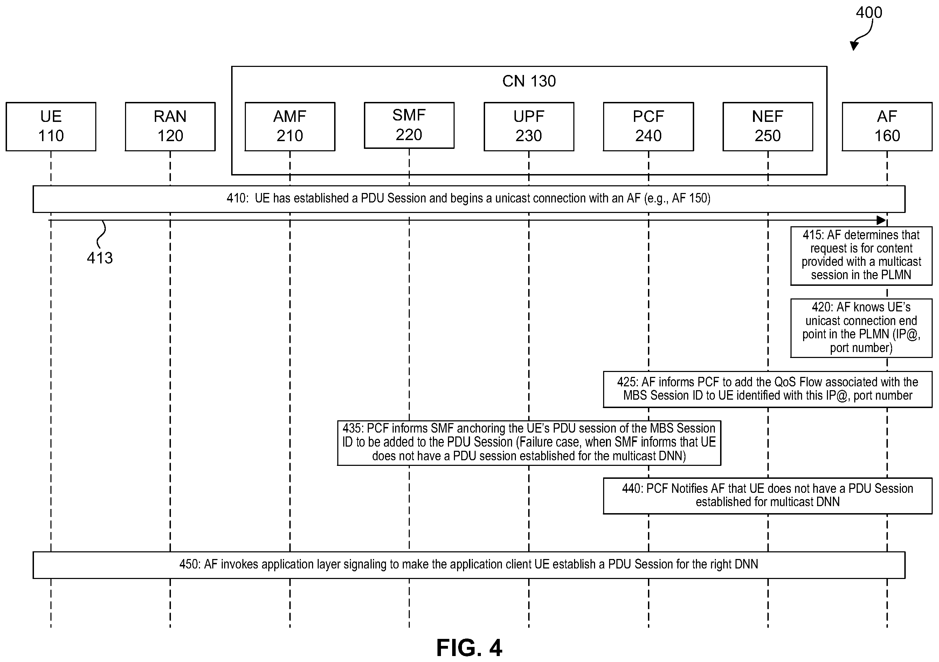

FIG. 4 illustrates example system 400 supporting AF initiated multicast session join procedures for MBS with application level redirection, according to some embodiments of the disclosure. As a convenience and not a limitation, system 400 can be described with reference to elements of previous figures. For example, system 400 includes CN 130 of FIG. 1 that can include AMF 210, SMF 220, UPF 230, PCF 240, and NEF 250. In system 400, unlike system 200, UE 110 has not established a PDU Session on the DNN/S-NSSAI providing the multicast session of the MBS. Some embodiments include AF 160 using application level redirection to make the application client in UE 110 start transmitting signals (e.g., application traffic according to a Traffic Descriptor) that triggers PDU Session establishment on the DNN/S-NSSAI providing the multicast session of the MBS.

At 410, UE 110 establishes a PDU Session and begins a unicast connection with an AF (e.g., AF 150 that is coupled to a different DNN/S-NSSAI than AF 160.) In other words, UE 110 has not established a PDU Session with AF 160 on the DNN/S-NSSAI providing the multicast session of the MBS.

At 413, UE 110 can transmit a request to AF 160 to fetch content (e.g., a video from AF 160, a content provider.)

At 415, AF 160 can receive the request from UE 110 to fetch content. AF 160 can perform admission control (e.g., authorization) to determine whether UE 110 is authorized to access the requested content. If UE 110 is authorized to access the requested content, AF 160 can determine whether the requested content is provided as a multicast session of an MBS or as a unicast session. If the requested content is provided as a multicast session of an MBS, AF 160 can determine the corresponding MBS Session ID.

At 420, based on the request, AF 160 can determine UE 110's unicast connection point in CN 130, and AF 160 can determine the corresponding Internet Protocol (IP) address and port number. In some embodiments, RAN 120 and CN 130 can be part of a PLMN. AF 160 can also determine a QoS flow associated with the MBS Session ID.

At 425, AF 160 requests that CN 130 add the QoS flow associated with the MBS session ID of the multicast session of the MBS, to UE 110 identified by the corresponding IP address and port number. In some embodiments, AF 160 can transmit a request to PCF 240 (e.g., via a NEF 250) to add the QoS flow associated with the corresponding MBS session ID of the multicast session of the MBS, to UE 110 identified by the IP address and port number. If NAT is used within CN 130, NEF 250 can map the IP addess that can be an external IP address, to UE 110's internal IP address. For example, AF 160 can transmit a signal such a MBS Session Add Request (IP address, port number, and MBS Session ID) to NEF 250. If NAT is implemented, NEF 250 can obtain UE 110's internal address using the IP address and port number. NEF 250 can route the request to PCF 240 that manages PDU Sessions corresponding to UE 110. For example, NEF 250 can transmit a signal such as Npcf_PolicyAuthorizationCreate/Update(UE 110's internal IP address, port number, MBS Session ID) to PCF 240.

At 435, PCF 240 can inform SMF 220 that anchors PDU Sessions of UE 110, of the MBS Session ID to be added to a PDU Session. For example, PCF 240 can transmit a signal such as Npcf_SMPolicyControlUpdateNotify (SM Policy Association ID, MBS Session ID) to SMF 220 (not shown.) SMF 220 can determine that UE 110 does not have an existing PDU Session corresponding to AF 160. SMF 220 can transmit a signal to PCF 240 indicating a failure to add UE 110 to the QoS flow corresponding to the MBS Session ID.

At 440, PCF 240 can notify AF 160 that UE 110 does not have a PDU Session established for the DNN/S-NSSAI providing the multicast session of the MBS. For example, PCF 240 can transmit a signal to AF 160 such as MBS Session Add Failure (IP address, port number, No PDU Session in required DNN/S-NSSAI). The IP address can be UE 110's external IP address if NAT is employed.

At 450, when AF 160 does not know UE 110's GPSI, AF 160 can invoke application level redirection to make an application client of UE 110 establish a PDU Session on the DNN/S-NSSAI providing the multicast session of the MBS. For example, UE 110 can be configured with UE Route Selection Policy (URSP) rules that map application traffic (e.g., Traffic Descriptor) to the corresponding PDU Session parameters for a multicast PDU Session. For example, the application traffic may be targeting a different Fully Qualified Domain Name (FQDN) reachable through the DNN/S-NSSAI providing the multicast session of the MBS. Thus, AF 160 can use application level redirection to make the application client in the UE start transmitting application traffic that triggers PDU Session establishment on the DNN/S-NSSAI providing the multicast session of the MBS. For example, the application level redirect message can include the MBS Session ID and/or the DNN/S-NSSAI for connecting to AF 160 offering the multicast session of the MBS.

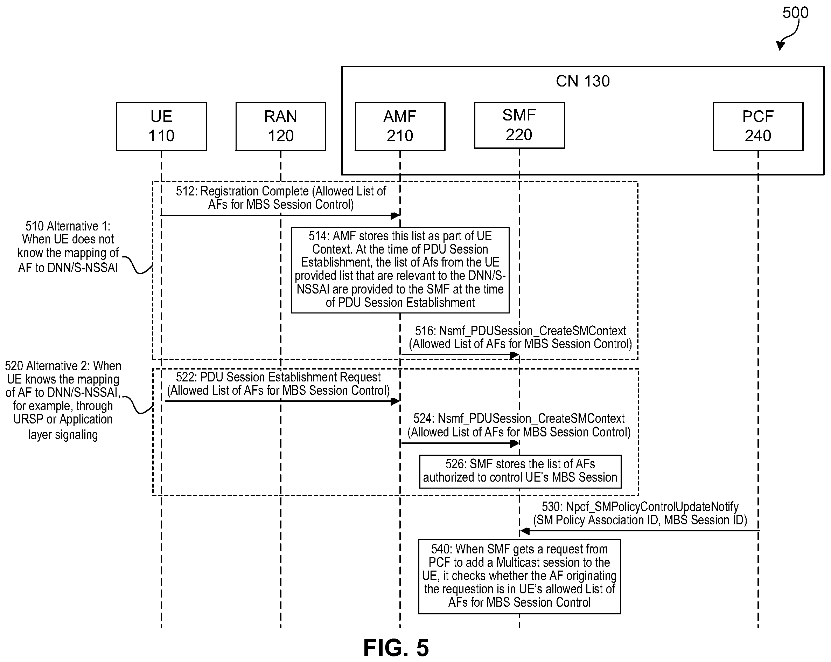

FIG. 5 illustrates examples for user equipment (UE) consent supporting AF initiated multicast session join procedures, according to some embodiments of the disclosure. As a convenience and not a limitation, system 500 can be described with reference to elements of previous figures. For example, system 500 includes CN 130 of FIG. 1 that can include AMF 210, SMF 220, and PCF 240. Some embodiments address how UE 110 controls or authorizes an AF (e.g., AF 160) to initiate multicast session join procedures. The authorization can prevent, for example, UE 110 from being joined to multicast sessions initiated by unauthorized AFs.

At 510, alternative 1 illustrates when UE 110 does not know the mapping of AF 160 to the DNN/S-NSSAI providing the multicast session of the MBS corresponding to the requested content. For example, UE 110 can provide this information during registration.

At 512, UE 110 indicates an allowed list of AFs (e.g., including AF 160) that are authorized to add UE 110 to multicast sessions. The indication can be transmitted in a NAS message from UE 110 to AMF 210 (e.g., Registration Complete (Allowed List of AFs for MBS Session Control).) In some embodiments, a new Information Element (IE) can include "Allowed List of AFs for MBS Session Control".

At 514, AMF 210 receives the Registration Complete message with the new IE indicating the Allowed List of AFs for MBS Session Control, and stores the Allowed List of AFs for MBS Session Control as part of UE Context. Subsequently, when a PDU Session is established, AMF 210 can retrieve and transmit a list of relevant AFs (e.g., a subset of the AFs from the Allowed List of AFs for MBS Session Control) that are relevant to the DNN/S-NSSAI to SMF 220. In some embodiments the entire Allowed List of AFs for MBS Session Control is transmitted when a PDU Session is to be established.

At 516, for example, AMF 210 can transmit a signal such as Nsmf_PDUSession_CreateSMContext(Allowed List of AFs for MBS Session Control), where the new IE can include a list of the relevant AFs (e.g., a subset of the Allowed List of AFs for MBS Session Control) or the entire Allowed List of AFs for MBS Session Control. In some embodiments, AMF 210 can determine the relevant Allowed list of AFs based on local configuration information (e.g., AFs associated with MBS sessions anchored in SMF 220.)

At 520, alternative 2 illustrates when UE 110 knows the mapping of AF 160 to the DNN/S-NSSAI providing the multicast session of the MBS corresponding to the requested content, for example through URSP or application layer signaling.

At 522, since UE 110 knows the mapping, UE 110 can transmit the new IE, e.g., the Allowed List of AFs for MBS Session Control per PDU Session, in a NAS Session Management (SM) signal. For example, UE 110 can transmit a signal to AMF 210 such as PDU Session Establishment Request (Allowed List of AFs for MBS Session Control).

At 524, AMF 210 can receive the PDU Session Establishment Request with the Allowed List of AFs for MBS Session Control. AMF 210 can transmit a signal to SMF 220 such as Nsmf_PDUSession_CreateSMContext(Allowed List of AFs for MBS Session Control).

At 526, SMF 220 can receive the signal from AMF 210 and can store the list of AFs authorized to control UE 110's MBS sessions.

At 530, subsequent to 516 or 524, SMF 220 can receive a signal from PCF 240 to add a MBS Session ID to an established PDU Session. For example, SMF 220 can receive a signal such as Npcf_SMPolicyControlUpdateNotify(SM Policy Association ID, MBS Session ID) from PCF 240. For example, the signal can be similar to 287 of FIG. 2B or 347 of FIG. 3B.

At 540, SMF 220 can determine whether the AF originating the request (e.g., AF 160) is in UE 110's Allowed List of AFs for MBS Session Control. If AF 160 is included, then the MBS Session ID corresponding to the requested content (e.g., from 265 of FIG. 2A, 315 of FIG. 3A, or 415 of FIG. 4) can be added to the established PDU Session. For example, the QoS flow corresponding to the MBS Session ID can be associated with UE 110. Otherwise, MBS Session ID is not added to the established PDU Session.

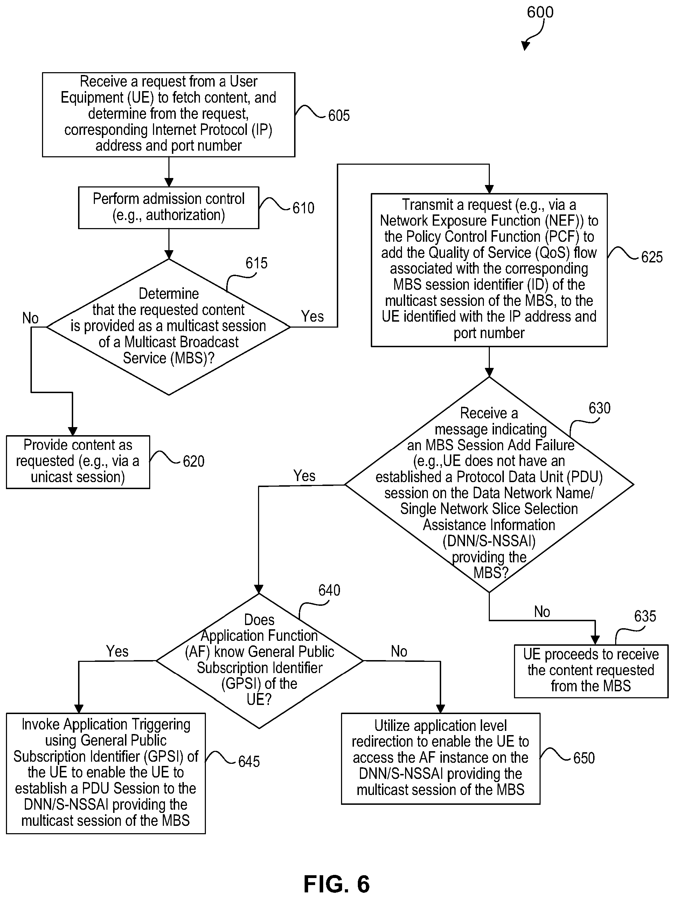

FIG. 6 illustrates example method 600 for an AF performing multicast session join procedures for MBS, according to some embodiments of the disclosure. As a convenience and not a limitation, method can be described with reference to elements of previous figures. For example, method 600 can be performed by AF 160 of FIG. 1 that can communicate with UE 110 of FIG. 1, as well as PCF 240 and NEF 250 of FIG. 2A and/or 2B.

At 605, AF 160 can receive a request from a UE 110 to fetch content, where the request includes an IP address and port number.

At 610, AF 160 can perform admission control (e.g., authorization) to determine whether UE 110 is authorized to receive the requested content.

At 615, AF 160 determines whether the requested content is provided as a multicast session of an MBS. When the requested content is provided as a multicast session of an MBS, method 600 proceeds to 625. Otherwise, method 600 proceeds to 620.

At 620, when the requested content is provided as a unicast session, AF 160 provides content as requested (e.g., via the unicast session.)

Returning to 625, when the requested content is provided as a multicast session, AF 160 can transmit a request (e.g., via a NEF 250) to PCF 240 to add the of QoS flow associated with the corresponding MBS session ID of the multicast session of the MBS, to UE 110 identified with the IP address and port number.

At 630, AF 160 determines a failure message regarding adding the QoS flow with the corresponding MBS session ID has been received. For example, AF 160 can determine whether a message indicating an MBS Session Add Failure (e.g., UE does not have an established a Protocol Data Unit (PDU) session on the Data Network Name/Single Network Slice Selection Assistance Information (DNN/S-NSSAI) providing the MBS is received or not. When the failure message is not received, method 600 proceeds to 635. Otherwise, method 600 proceeds to 640.

At 635, when a failure message is not received (e.g., SMF 220 successfully added the QoS flow corresponding to the MBS Session ID to the PDU Session,) UE 110 proceeds to receive the content requested from the MBS (e.g., from AF 160.)

Returning to 640, when a failure message is received, AF 160 determines whether the General Public Subscription Identifier (GPSI) of the UE is known. When AF 160 knows the GPSI, method 600 proceeds to 645. Otherwise, method 600 proceeds to 650.

At 645, AF 160 can invoke application triggering using the GPSI of the UE to enable UE 110 to establish a PDU Session to the DNN/S-NSSAI providing the multicast session of the MBS.

Returning to 650, when AF 160 does not know the GPSI of UE 110, AP 160 can utilize application level redirection to enable UE 110 to trigger establishing a PDU Session to access an AF instance on the DNN/S-NSSAI providing the multicast session of the MBS.

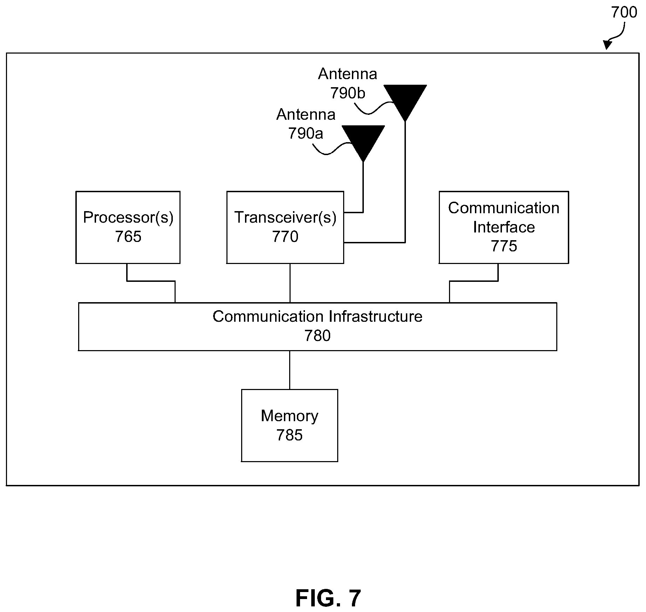

FIG. 7 illustrates a block diagram of example wireless system 700 operating in a MBS environment, according to some embodiments of the disclosure. For explanation purposes and not a limitation, FIG. 7 may be described with reference to elements from FIG. 1. For example, system 700 may be any of the electronic devices (e.g., UE 110, devices of RAN 120, devices of CN 130, or AF 160) of system 100.

System 700 includes one or more processors 765, transceiver(s) 770, communication interface 775, communication infrastructure 780, memory 785, and antenna 790. Memory 785 may include random access memory (RAM) and/or cache, and may include control logic (e.g., computer instructions) and/or data. One or more processors 765 can execute the instructions stored in memory 785 to perform operations enabling wireless system 700 to transmit and receive wireless communications, including the functions for supporting AF initiated multicast session join procedures for MBS herein. In some embodiments, one or more processors 765 can be "hard coded" to perform the functions herein. Transceiver(s) 770 transmits and receives wireless communications signals including wireless communications supporting AF initiated multicast session join procedures for MBS according to some embodiments, and may be coupled to one or more antennas 790 (e.g., 790a, 790b). In some embodiments, a transceiver 770a (not shown) may be coupled to antenna 790a and different transceiver 770b (not shown) can be coupled to antenna 790b. Communication interface 775 allows system 700 to communicate with other devices that may be wired and/or wireless. Communication infrastructure 780 may be a bus. Antenna 790 may include one or more antennas that may be the same or different types.

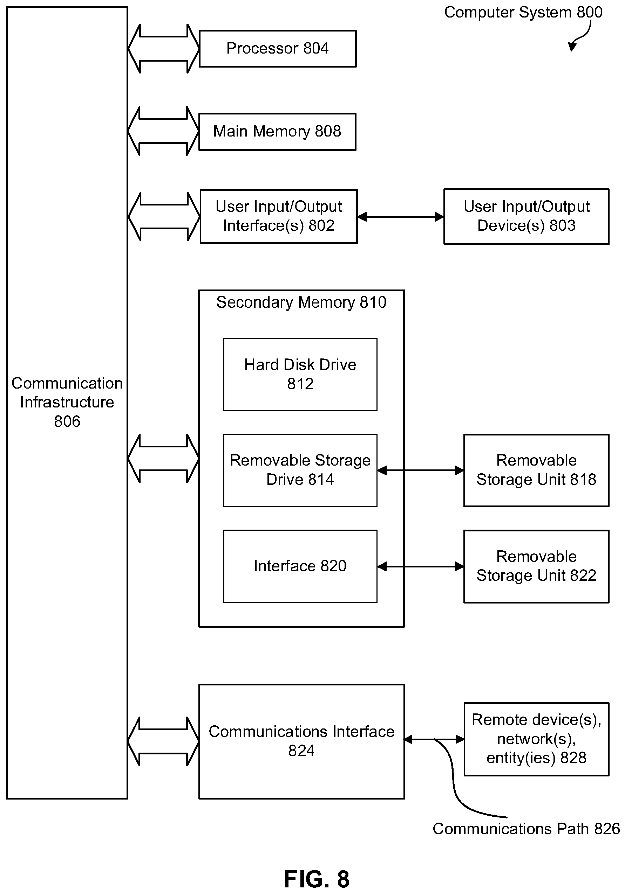

Various embodiments can be implemented, for example, using one or more well-known computer systems, such as computer system 800 shown in FIG. 8. Computer system 800 can be any well-known computer capable of performing the functions described herein. For example, and without limitation, devices of system 100 of FIG. 1; devices performing functions described in: System 200 of FIG. 2, system 300 of FIG. 3, system 400 of FIG. 4, system 500 of FIG. 5; and devices performing functions of method 600 of FIG. 6 (and/or other apparatuses and/or components shown in the figures) may be implemented using computer system 800, or portions thereof.

Computer system 800 includes one or more processors (also called central processing units, or CPUs), such as a processor 804. Processor 804 is connected to a communication infrastructure 806 that can be a bus. One or more processors 804 may each be a graphics processing unit (GPU). In an embodiment, a GPU is a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 800 also includes user input/output device(s) 803, such as monitors, keyboards, pointing devices, etc., that communicate with communication infrastructure 806 through user input/output interface(s) 802. Computer system 800 also includes a main or primary memory 808, such as random access memory (RAM). Main memory 808 may include one or more levels of cache. Main memory 808 has stored therein control logic (e.g., computer software) and/or data.

Computer system 800 may also include one or more secondary storage devices or memory 810. Secondary memory 810 may include, for example, a hard disk drive 812 and/or a removable storage device or drive 814. Removable storage drive 814 may be a floppy disk drive, a magnetic tape drive, a compact disk drive, an optical storage device, tape backup device, and/or any other storage device/drive.

Removable storage drive 814 may interact with a removable storage unit 818. Removable storage unit 818 includes a computer usable or readable storage device having stored thereon computer software (control logic) and/or data. Removable storage unit 818 may be a floppy disk, magnetic tape, compact disk, DVD, optical storage disk, and/ any other computer data storage device. Removable storage drive 814 reads from and/or writes to removable storage unit 818 in a well-known manner.

According to some embodiments, secondary memory 810 may include other means, instrumentalities or other approaches for allowing computer programs and/or other instructions and/or data to be accessed by computer system 800. Such means, instrumentalities or other approaches may include, for example, a removable storage unit 822 and an interface 820. Examples of the removable storage unit 822 and the interface 820 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 800 may further include a communication or network interface 824. Communication interface 824 enables computer system 800 to communicate and interact with any combination of remote devices, remote networks, remote entities, etc. (individually and collectively referenced by reference number 828). For example, communication interface 824 may allow computer system 800 to communicate with remote devices 828 over communications path 826, which may be wired and/or wireless, and which may include any combination of LANs, WANs, the Internet, etc. Control logic and/or data may be transmitted to and from computer system 800 via communication path 826.

The operations in the preceding embodiments can be implemented in a wide variety of configurations and architectures. Therefore, some or all of the operations in the preceding embodiments may be performed in hardware, in software or both. In some embodiments, a tangible, non-transitory apparatus or article of manufacture includes a tangible, non-transitory computer useable or readable medium having control logic (software) stored thereon is also referred to herein as a computer program product or program storage device. This includes, but is not limited to, computer system 800, main memory 808, secondary memory 810 and removable storage units 818 and 822, as well as tangible articles of manufacture embodying any combination of the foregoing. Such control logic, when executed by one or more data processing devices (such as computer system 800), causes such data processing devices to operate as described herein.

Based on the teachings contained in this disclosure, it will be apparent to persons skilled in the relevant art(s) how to make and use embodiments of the disclosure using data processing devices, computer systems and/or computer architectures other than that shown in FIG. 8. In particular, embodiments may operate with software, hardware, and/or operating system implementations other than those described herein.

It is to be appreciated that the Detailed Description section, and not the Summary and Abstract sections, is intended to be used to interpret the claims. The Summary and Abstract sections may set forth one or more but not all exemplary embodiments of the disclosure as contemplated by the inventor(s), and thus, are not intended to limit the disclosure or the appended claims in any way.

While the disclosure has been described herein with reference to exemplary embodiments for exemplary fields and applications, it should be understood that the disclosure is not limited thereto. Other embodiments and modifications thereto are possible, and are within the scope of the disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. In addition, alternative embodiments may perform functional blocks, steps, operations, methods, etc. using orderings different from those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should only occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

## Claims

1. A method for an application function, AF, server, comprising:
receiving (263) a first request from a User Equipment, UE, (110) to fetch content;
determining (265) that the content is provided by the AF server (160) via a multicast session of a Multicast Broadcast Service, MBS;
transmitting (275) a second request via a Network Exposure Function, NEF, (250) to a Policy Control Function, PCF, (240) to add a Quality of Service, QoS, flow associated with an MBS session identifier, ID, corresponding to the multicast session of the MBS, to the UE;
receiving a message indicating an MBS session Add Failure message;
setting an Application Port ID field identifying an MBS client of the UE; and
in response to the message, transmitting a signal comprising a General Public Subscription Identifier, GPSI, of the UE and a port number identifying the MBS client of the UE, wherein the UE establishes a protocol data unit, PDU, session to a Data Network Name/Single Network Slice Selection Assistance Information, DNN/S-NSSAI, providing the multicast session of the MBS.

2. The method of claim 1, further comprising:
determining an Internet Protocol, IP, address and the port number corresponding to the UE based at least on the first request.

3. The method of any of claims 1 or 2, further comprising:
receiving a second message indicating a second MBS session Add Failure; and
in response to the second message, utilizing application level redirection to enable the UE to access an AF instance on the DNN/S-NSSAI providing the multicast session of the MBS.

4. The method of any of claims 1 to 3, wherein the UE initiates a session leaving procedure of the multicast session of the MBS.

5. A core network, CN, node, comprising:
a Policy Control Function, PCF, (240); and
a Network Exposure Function, NEF, (250) communicatively coupled to the PCF, wherein the NEF comprises:
a NEF memory; and
a NEF processor coupled to the NEF memory, configured to:
receive a first request (275) from an application function, AF, server (160) to add a user equipment, UE, (110) to a multicast session of a Multicast Broadcast Service, MBS, wherein the AF server (160) provides the MBS; and
transmit, to the PCF (240), a second request to associate an MBS session identifier, ID, corresponding to the multicast session with the UE, wherein the PCF (240) corresponds to a Protocol Data Unit, PDU, Session of the UE (110);
wherein the PCF (240) is configured to:
determine that the PDU Session does not correspond to a Data Network Name/Single Network Slice Selection Assistance Information, DNN/S-NSSAI, providing the multicast session;
based on the determination, transmit an MBS Session Add Failure message to the AF server;
wherein the NEF processor is configured to:
subsequent to transmitting the second request to the PCF, receive, from the AF server in response to the message, a signal comprising a General Public Subscription Identifier, GPSI, of the UE and a port number identifying an MBS client of the UE, wherein the UE establishes a second PDU Session corresponding to the DNN/S-NSSAI providing the multicast session of the MBS;
obtain a mapping of the GPSI to a Subscription Permanent Identifier, SUPI, of the UE; and
contact a short message service, SMS,-service center, SC, to send a mobile terminated, MT, SMS to the UE, wherein the MBS client triggers the UE to establish the second PDU session.

6. The CN node of claim 6, further comprising a Session Management Function, SMF, communicatively coupled to the PCF, wherein the PCF is further configured to:
transmit a signal to the SMF corresponding to the PDU Session of the UE, wherein the signal comprises a multicast MBS session ID corresponding to the multicast session of the MBS.

7. The CN node of claim 6, wherein the SMF is further configured to:
modify the PDU Session of the UE to add the UE to the multicast session of the MBS.

8. The CN node of claim 7, further comprising an Access and Mobility Management Function, AMF, communicatively coupled to the SMF, wherein the AMF is configured to:
receive an allowed list of AFs for MBS session control from the UE; and
transmit the allowed list of AFs to the SMF; and
wherein to modify the PDU Session of the UE, the SMF is further configured to:
determine whether the AF server is included in the allowed list of AFs.

9. The CN node of claim 8, wherein the AMF is further configured to:
store the allowed list of AFs as part of UE context of the UE.

10. The CN node of any of claims 8 or 9, wherein the SMF is further configured to:
store the list of AFs.

11. An application function, AF, server, comprising:
a memory; and
a processor coupled to the memory, configured to perform the method of any of claims 1 to 5.

12. A non-transitory computer-readable medium storing instructions that, when executed by a processor of an application function, AF, server, cause the AF server to perform the method of any of claims 1 to 5.

## Patentansprüche

1. Verfahren für einen Anwendungsfunktionsserver, AF-Server, umfassend:
Empfangen (263) einer ersten Anforderung von einer Benutzereinrichtung, UE, (110), um Inhalt abzurufen;
Bestimmen (265), dass der Inhalt durch den AF-Server (160) über eine Multicast-Sitzung eines Multicast-Broadcast-Dienstes, MBS, bereitgestellt wird;
Übertragen (275) einer zweiten Anforderung über eine Netzwerkexpositionsfunktion, NEF, (250) an eine Richtliniensteuerungsfunktion, PCF, (240), um einen Dienstgütefluss, QoS-Fluss, der mit einer MBS-Sitzungskennung, ID, verknüpft ist, die der Multicast-Sitzung des MBS entspricht, zu der UE hinzuzufügen;
Empfangen einer Nachricht, die eine MBS-Sitzung-Hinzufügen-Fehler-Nachricht anzeigt;
Einstellen eines Anwendungsport-ID-Feldes, das einen MBS-Client der UE identifiziert; und
als Reaktion auf die Nachricht, Übertragen eines Signals, umfassend eine allgemeine öffentliche Teilnahmeberechtigungskennung, GPSI, der UE und eine Portnummer, die den MBS-Client der UE identifiziert, wobei die UE eine Protokolldateneinheitssitzung, PDU-Sitzung mit einem Datennetzwerknamen/einer Single-Network-Slice-Selection-Assistance- Information, DNN/S-NSSAI, aufbaut, der/die die Multicast-Sitzung des MBS bereitstellt.

2. Verfahren nach Anspruch 1, ferner umfassend:
Bestimmen einer Internetprotokolladresse, IP-Adresse, und der Portnummer, die der UE entspricht, basierend mindestens auf der ersten Anforderung.

3. Verfahren nach einem der Ansprüche 1 oder 2, ferner umfassend:
Empfangen einer zweiten Nachricht, die einen zweiten MBS-Sitzung-Hinzufügen-Fehler anzeigt; und
als Reaktion auf die zweite Nachricht, Nutzen einer Anwendungsebenenumleitung, um der UE zu ermöglichen, auf eine AF-Instanz auf dem/der DNN/S-NSSAI zuzugreifen, der/die die Multicast-Sitzung des MBS bereitstellt.

4. Verfahren nach einem der Ansprüche 1 bis 3, wobei die UE einen Sitzungsverlassungsvorgang der Multicast-Sitzung des MBS initiiert.

5. Kernnetzwerkknoten, CN-Knoten, umfassend:
eine Richtliniensteuerungsfunktion, PCF, (240); und
eine Netzwerkexpositionsfunktion, NEF, (250), die mit der PCF kommunikativ gekoppelt ist, wobei die NEF umfasst:
einen NEF-Speicher; und
einen NEF-Prozessor, der mit dem mit dem Speicher gekoppelt ist, der konfiguriert ist zum:
Empfangen einer ersten Anforderung (275) von einem Anwendungsfunktionsserver, AF-Server (160), um eine Benutzereinrichtung, UE, (110) zu einer Multicast-Sitzung eines Multicast-Broadcast-Dienstes, MBS, hinzuzufügen, wobei der AF-Server (160) den MBS bereitstellt; und
Übertragen, an die PCF (240), einer zweiten Anforderung, um eine MBS-Sitzungskennung, ID, die der Multicast-Sitzung entspricht, mit der UE zu verknüpfen, wobei die PCF (240) einer Protokolldateneinheitssitzung, PDU-Sitzung, der UE (110) entspricht;
wobei die PCF (240) konfiguriert ist zum:
Bestimmen, dass die PDU-Sitzung nicht einem Datennetzwerknamen/einer Single-Network-Slice-Selection-Assistance-Information, DNN/S-NSSAI, entspricht, der/die die Multicast-Sitzung bereitstellt;
basierend auf dem Bestimmen, Übertragen einer MBS-Sitzung-Hinzufügen-Fehler-Nachricht an den AF-Server;
wobei der NEF-Prozessor konfiguriert ist zum:
nach dem Übertragen der zweiten Anforderung an die PCF, Empfangen, von dem AF-Server als Reaktion auf die Nachricht, eines Signals, umfassend eine allgemeine öffentliche Teilnahmeberechtigungskennung, GPSI, der UE und eine Portnummer, die einen MBS-Client der UE identifiziert, wobei die UE eine zweite PDU-Sitzung aufbaut, die dem/der DNN/S-NSSAI entspricht, der/die die Multicast-Sitzung des MBS bereitstellt;
Erhalten einer Zuordnung der GPSI zu einer dauerhaften Teilnahmeberechtigungskennung, SUPI, der UE; und
Kontaktieren eines Kurznachrichtendienstdienstzentrums, SMS-Dienstzentrum, SC, um eine Mobile Terminated, MT, SMS an die UE zu senden, wobei der MBS-Client auslöst, dass die UE die zweite PDU-Sitzung aufbaut.

6. CN-Knoten nach Anspruch 6, ferner umfassend eine Sitzungsverwaltungsfunktion, SMF, die mit der PCF kommunikativ gekoppelt ist, wobei die PCF ferner konfiguriert ist zum:
Übertragen eines Signals an die SMF, die der PDU-Sitzung der UE entspricht, wobei das Signal eine Multicast-MBS-Sitzungs-ID umfasst, die der Multicast-Sitzung des MBS entspricht.

7. CN-Knoten nach Anspruch 6, wobei die SMF ferner konfiguriert ist zum:
Modifizieren der PDU-Sitzung der UE, um die UE zu der Multicast-Sitzung des MBS hinzuzufügen.

8. CN-Knoten nach Anspruch 7, ferner umfassend eine Zugriff- und Mobilitätsverwaltungsfunktion, AMF, die mit der SMF kommunikativ gekoppelt ist, wobei die AMF konfiguriert ist zum:
Empfangen einer zugelassenen Liste von AFs für MBS-Sitzungssteuerung von der UE; und
Übertragen der zugelassenen Liste von AFs an die SMF; und
wobei, um die PDU-Sitzung der UE zu modifizieren, die SMF ferner konfiguriert ist zum:
Bestimmen, ob der AF-Server in der zugelassenen Liste von AFs eingeschlossen ist.

9. CN-Knoten nach Anspruch 8, wobei die AMF ferner konfiguriert ist zum:
Speichern der zugelassenen Liste von AFs als Teil von UE-Kontext der UE.

10. CN-Knoten nach einem der Ansprüche 8 bis 9, wobei die SMF ferner konfiguriert ist zum:
Speichern der Liste von AFs.

11. Anwendungsfunktionsserver, AF-Server, umfassend:
einen Speicher; und
einen Prozessor, der mit dem Speicher gekoppelt ist, der konfiguriert ist, um das Verfahren nach einem der Ansprüche 1 bis 5 durchzuführen.

12. Nichtflüchtiges computerlesbares Medium, das Anweisungen speichert, die, wenn sie durch einen Prozessor eines Anwendungsfunktionsservers, AF-Servers, ausgeführt werden, den AF-Server veranlassen, das Verfahren nach einem der Ansprüche 1 bis 5 durchzuführen.

## Revendications

1. Procédé destiné à un serveur de fonctions d'application, AF, comprenant :
la réception (263) d'une première demande en provenance d'un équipement utilisateur, UE, (110) pour récupérer un contenu ;
la détermination (265) que le contenu est fourni par le serveur AF (160) par l'intermédiaire d'une session de multidiffusion d'un service de diffusion multidiffusion, MBS ;
la transmission (275) d'une seconde demande par l'intermédiaire d'une fonction d'exposition réseau, NEF, (250) à une fonction de commande de politique, PCF, (240) pour ajouter un flux de qualité de service, QoS, associé à un identificateur, ID, de session MBS correspondant à la session de multidiffusion du MBS, à l'UE ;
la réception d'un message indiquant un message d'échec d'ajout de session MBS ;
le réglage d'un champ d'ID de port d'application identifiant un client MBS de l'UE ; et
en réponse au message, la transmission d'un signal comprenant un identificateur d'abonnement public général, GPSI, de l'UE et un numéro de port identifiant le client MBS de l'UE, dans lequel l'UE établit une session d'unité de données de protocole, PDU, vers un nom de réseau de données/informations d'assistance de sélection de tranche de réseau unique, DNN/S-NSSAI, fournissant la session de multidiffusion du MBS.

2. Procédé selon la revendication 1, comprenant en outre :
la détermination d'une adresse de protocole Internet, IP, et du numéro de port correspondant à l'UE en fonction au moins de la première demande.

3. Procédé selon l'une quelconque des revendications 1 ou 2, comprenant en outre :
la réception d'un second message indiquant un second échec d'ajout de session MBS ; et
en réponse au second message, l'utilisation d'une redirection de niveau application pour permettre à l'UE d'accéder à une instance AF sur le DNN/S-NSSAI fournissant la session de multidiffusion du MBS.

4. Procédé selon l'une quelconque des revendications 1 à 3, dans lequel l'UE initie une procédure d'abandon de session de la session de multidiffusion du MBS.

5. Nœud de réseau central, CN, comprenant :
une fonction de commande de politique, PCF, (240) ; et
une fonction d'exposition réseau, NEF, (250) couplée en communication avec la PCF, dans lequel la NEF comprend :
une mémoire NEF ; et
un processeur NEF couplé à la mémoire NEF, configuré pour :
recevoir une première demande (275) en provenance d'un serveur de fonctions d'application, AF, (160) pour ajouter un équipement utilisateur, UE, (110) à une session de multidiffusion d'un service de diffusion multidiffusion, MBS, dans lequel le serveur AF (160) fournit le MBS ; et
transmettre, à la PCF (240), une seconde demande pour associer un identificateur, ID, de session MBS correspondant à la session de multidiffusion à l'UE, dans lequel la PCF (240) correspond à une session d'unité de données de protocole, PDU, de l'UE (110) ;
dans lequel la PCF (240) est configurée pour :
déterminer que la session PDU ne correspond pas à un nom de réseau de données/informations d'assistance de sélection de tranche de réseau unique, DNN/S-NSSAI, fournissant la session de multidiffusion ;
en fonction de la détermination, transmettre un message d'échec d'ajout de session MBS au serveur AF ;
dans lequel le processeur NEF est configuré pour :
à la suite de la transmission de la seconde demande à la PCF, recevoir, en provenance du serveur AF en réponse au message, un signal comprenant un identificateur d'abonnement public général, GPSI, de l'UE et un numéro de port identifiant un client MBS de l'UE, dans lequel l'UE établit une seconde session PDU correspondant au DNN/S-NSSAI fournissant la session de multidiffusion du MBS ;
obtenir un mappage du GPSI à un identificateur permanent d'abonnement, SUPI, de l'UE ; et
contacter un centre de service, SC, de service de messages courts, SMS, pour envoyer un SMS à terminaison mobile, MT, à l'UE, dans lequel le client MBS déclenche l'UE pour établir la seconde session PDU.

6. Nœud CN selon la revendication 6, comprenant en outre une fonction de gestion de session, SMF, couplée en communication avec la PCF, dans lequel la PCF est configurée en outre pour :
transmettre un signal à la SMF correspondant à la session PDU de l'UE, dans lequel le signal comprend un ID de session MBS de multidiffusion correspondant à la session de multidiffusion du MBS.

7. Nœud CN selon la revendication 6, dans lequel la SMF est configurée en outre pour :
modifier la session PDU de l'UE pour ajouter l'UE à la session de multidiffusion du MBS.

8. Nœud CN selon la revendication 7, comprenant en outre une fonction de gestion d'accès et de mobilité, AMF, couplée en communication avec la SMF, dans lequel l'AMF est configurée pour :
recevoir une liste verte d'AF pour une commande de session MBS à partir de l'UE ; et
transmettre la liste verte d'AF à la SMF ; et
dans lequel pour modifier la session PDU de l'UE, la SMF est configurée en outre pour :
déterminer si le serveur AF est inclus dans la liste verte d'AF.

9. Nœud CN selon la revendication 8, dans lequel l'AMF est configurée en outre pour :
stocker la liste verte d'AF dans le cadre d'un contexte d'UE de l'UE.

10. Nœud CN selon l'une quelconque des revendications 8 ou 9, dans lequel la SMF est configurée en outre pour :
stocker la liste d'AF.

11. Serveur de fonctions d'application, AF, comprenant :
une mémoire ; et
un processeur couplé à la mémoire, configuré pour mettre en œuvre le procédé selon l'une quelconque des revendications 1 à 5.

12. Support non transitoire lisible par ordinateur stockant des instructions qui, lorsqu'elles sont exécutées par un processeur d'un serveur de fonctions d'application, AF, amènent le serveur AF à mettre en œuvre le procédé selon l'une quelconque des revendications 1 à 5.
